(19) Europäisches Patentamt / European Patent Office / Office européen des brevets

(11) **EP 4 742 070 A1**

(12) **EUROPEAN PATENT APPLICATION**
published in accordance with Art. 153(4) EPC

(43) Date of publication:
**13.05.2026  Bulletin 2026/20**

(21) Application number: **24835954.9**

(22) Date of filing: **25.06.2024**

(51) International Patent Classification (IPC):
**G06F 21/55** (2013.01)     **G06K 7/00** (2006.01)
**G06K 19/073** (2006.01)

(52) Cooperative Patent Classification (CPC):
**G06F 21/55; G06K 7/00; G06K 19/073**

(86) International application number:
**PCT/JP2024/023011**

(87) International publication number:
**WO 2025/009441 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **05.07.2023  JP 2023110644**

(71) Applicant: **KABUSHIKI KAISHA TOSHIBA**
**Kawasaki-shi, Kanagawa, 212-0013 (JP)**

(72) Inventor: **TANIMOTO, Yuriko**
**Kawasaki-shi, Kanagawa 210-0007 (JP)**

(74) Representative: **HKW Intellectual Property PartG mbB**
**Theresienhöhe 12**
**80339 München (DE)**

(54) **PORTABLE ELECTRONIC DEVICE, IC CARD, AND IC CARD PROCESSOR**

(57)     According to an embodiment, a portable electronic device includes an interface, a memory, and a processor. The interface communicates with an external device. The memory stores setting information on a standby time for setting a lower limit value of the standby time from when the external device transmits a command to when the external device receives a response to the command. The processor transmits, to the external device, standby time information for specifying the lower limit value of the standby time based on the setting information on the standby time stored in the memory, executes processing according to a command received from the external device to which the standby time information has been transmitted, and transmits, to the external device, a response including an execution result of the processing according to the command.

F I G. 1

## Description

### FIELD

Embodiments described herein relate generally to a portable electronic device, an IC card, and an IC card processing device.

### BACKGROUND

In recent years, there has been known a security attack that causes a control circuit to execute a fraudulent operation by delivering an attack to an IC card, which is a portable electronic device, from an outside. Due to such an attack from the outside, the IC card may perform a fraudulent operation such as skipping a part of regular processing, e.g., determination processing necessary for maintaining security.

However, conventional IC cards have a problem wherein a normal response may be output even in a case where a part of regular processing requested through a command is skipped due to the external attack. For this reason, as an IC card processing system including an IC card and a card reader/writer, there is a demand for a system capable of detecting such a fraud wherein a part of regular processing such as determination processing in the IC card is skipped.

### CITATION LIST

### PATENT LITERATURE

Jpn. Pat. Appln. KOKAI Publication No. 2020-009305

### SUMMARY

### TECHNICAL PROBLEM

In order to solve the problem described above, the present invention provides a portable electronic device, an IC card, and an IC card processing device each capable of detecting a fraudulent operation.

### SOLUTION TO PROBLEM

According to an embodiment, a portable electronic device includes an interface, a memory, and a processor. The interface communicates with an external device. The memory stores setting information on a standby time for setting a lower limit value of the standby time from when the external device transmits a command to when the external device receives a response to the command. The processor transmits, to the external device, standby time information for specifying the lower limit value of the standby time based on the setting information on the standby time stored in the memory, executes processing according to a command received from the external device to which the standby time information has been transmitted, and transmits, to the external device, a response including an execution result of the processing according to the command.

### BRIEF DESCRIPTION OF THE DRAWINGS

FIG. 1 is a block diagram showing an example of a configuration of an IC card serving as a portable electronic device according to an embodiment.
FIG. 2 is a block diagram showing an example of a configuration of an IC card processing device configured to communicate with the IC card serving as the portable electronic device according to the embodiment.
FIG. 3 is a diagram showing an example of setting information on a processing time stored in a memory of the IC card serving as the portable electronic device according to the embodiment.
FIG. 4 is a diagram showing an example of setting information on the processing time stored in the memory of the IC card serving as the portable electronic device according to the embodiment.
FIG. 5 is a diagram showing an example of an adjustment value for the setting information on the processing time stored in the memory of the IC card serving as the portable electronic device according to the embodiment.
FIG. 6 is a diagram showing an example of the adjustment value for the setting information on the processing time stored in the memory of the IC card serving as the portable electronic device according to the embodiment.
FIG. 7 is a sequence for illustrating an upper limit and a lower limit of the standby time by the IC card processing device with respect to the IC card serving as the portable electronic device according to the embodiment.
FIG. 8 is a flowchart for illustrating an operation example of the IC card serving as the portable electronic device according to the embodiment.
FIG. 9 is a flowchart for illustrating an operation example of the IC card processing device according to the embodiment.

### DETAILED DESCRIPTION

Hereinafter, embodiments will be described with reference to the drawings.

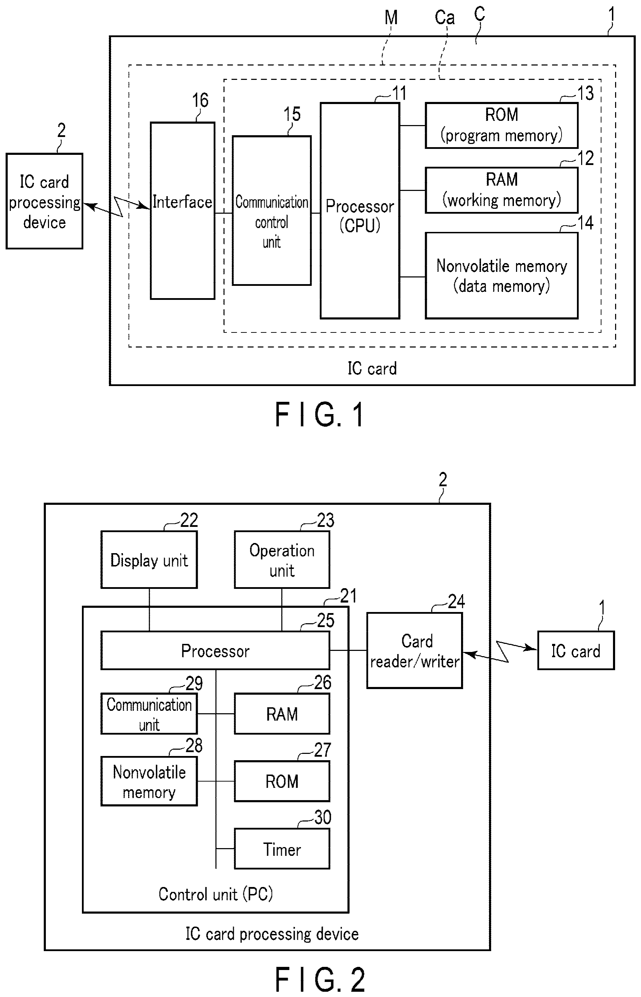

FIG. 1 is a block diagram schematically illustrating an example of a configuration of an IC card 1 according to an embodiment. An IC card 1 serving as a portable electronic device according to the embodiment constitutes an IC card processing system together with an IC card processing device 2. The IC card 1 is a portable electronic device that is activated (becomes operable) with power supplied from the IC card processing device 2. The IC card 1 will also be referred to as a smart card.

The portable electronic device according to the embodiment is not limited to a card-like shape, and may be a booklet-like shape (for example, a notebook such as a passport) having a configuration and a processing function equivalent to those of the IC card 1 to be described later. The portable electronic device according to the embodiment may be a portable electronic device (for example, a smartphone, a mobile phone, a tablet PC, a dongle, etc.) having a configuration and a processing function equivalent to those of the IC card 1 to be described later.

The IC card 1 is roughly classified into a contact type IC card and a non-contact type IC card. For example, the contact type IC card 1 is activated by receiving a supply of an operation power source and an operation clock from the IC card processing device 2 via a contact unit serving as a communication interface. The non-contact type IC card 1 is activated by receiving a radio wave from the IC card processing device 2 via an antenna, a modulation/demodulation circuit, and the like, which are a communication interface, and generating an operation power source and an operation clock from the radio wave.

As shown in FIG. 1, the IC card 1 has a main body C. The main body C is formed from, e.g., plastic into a card shape. The IC card 1 has a module M inside the main body C. The module M is integrally formed in a state in which one or a plurality of IC chips Ca and an external interface (interface) for communication are connected to each other, and is embedded in the main body C.

The portable electronic device according to the embodiment may include the module M in a main body formed into a booklet shape, or may include the module M inside a main body forming a portable electronic device (portable terminal).

In the example of the configuration shown in FIG. 1, the module M of the IC card 1 includes a processor 11, a RAM12, a ROM13, a nonvolatile memory 14, a communication control unit 15, an interface 16, etc.

The processor 11 includes a circuit configured to execute various types of processing. The processor 11 is, for example, a central processing unit (CPU). The processor 11 exerts control over the entire IC card 1. The processor 11 realizes various processing functions by executing a program stored in the ROM 13 or the nonvolatile memory 14. However, part or all of the various functions executed by the processor 11 to be described later may be realized by a hardware circuit.

The RAM 12 is a volatile memory that functions as a working memory. The RAM 12 also functions as a buffer that temporarily stores data that the processor 11 is processing. For example, the RAM 12 functions as a communication buffer that temporarily stores data transmitted to and received from the IC card processing device 2 via the communication control unit 15 and the interface 16.

The ROM 13 is a nonvolatile memory that functions as a program memory. The ROM 13 stores a program for control, control data, etc., in advance. The ROM 13 is incorporated into the IC card 1 in a state in which the control program, the control data, etc., are stored in the ROM 13 at a manufacturing stage. That is, the control program and the control data stored in the ROM 13 are incorporated in advance in accordance with the specification of the IC card 1. For example, the ROM 13 stores a program for the processor 11 to execute processing according to a command received from the IC card processing device 2.

The nonvolatile memory 14 is a nonvolatile memory in which data can be written and rewritten. The nonvolatile memory 14 is configured by, for example, an electrically erasable programmable read-only memory (EEPROM) (registered trademark), a flash ROM, or the like. The nonvolatile memory 14 has a tamper-resistant property in part or the whole of its area, and can securely store data. A program and various items of data according to the operational use of the IC card 1 are written in the nonvolatile memory 14. The nonvolatile memory 14 stores data in a file structure defined by a predetermined standard. Files such as a program file, a data file, or the like are defined in the nonvolatile memory 14, and a control program and various items of data are written in these files.

For example, in the nonvolatile memory 14 of the IC card compatible with international standard ISO/-IEC 7816-4, a plurality of file groups having a hierarchical structure including a master file (MF), a dedicated file (DF), an elementary file (EF), and the like are defined. In the file structure defined in ISO/IEC 7816-4, the MF is present in the uppermost layer, and one or more DFs are present in the layer after the MF. One DF stores, for example, data for implementing one application. In addition, one or more EFs are present in the layer after the DF. Each EF stores various items of data used for an application as the DF.

The communication control unit 15 is connected to the interface 16. The interface 16 is an interface for establishing communication connections to an external device. The communication control unit 15 and the interface 16 constitute a communication unit. The communication control unit 15 and the interface 16 realize a communication function by a communication method corresponding to the interface of the IC card processing device 2. The communication control unit 15 and the interface 16 may be configured to support a plurality of communication systems (for example, a contact communication and a non-contact communication).

In a case where the IC card 1 is realized as a contact type IC card, the communication control unit 15 and the interface 16 constitute a communication unit that communicates with the IC card processing device 2 by coming into contact with the IC card processing device 2. In such a case, the interface 16 is configured by a contact unit that comes into physical and electrical contact with a contact unit of the IC card processing device 2, and the communication control unit 15 is configured by a circuit that controls transmission and reception of a signal via the contact unit.

In addition, in a case where the IC card 1 is realized as a non-contact type IC card, the communication control unit 15 and the interface 16 constitute a communication unit that communicates with a card reader/writer of the IC card processing device 2 in a non-contact manner (wirelessly). In such a case, the interface 16 is configured by an antenna that transmits and receives radio waves, and the communication control unit 15 is configured by a modulation circuit for generating radio waves to be transmitted, a demodulation circuit for generating a signal from received radio waves, and the like.

Next, a configuration of the IC card processing device 2 according to the embodiment will be described.

FIG. 2 is a block diagram schematically illustrating an example of a configuration of the IC card processing device 2 according to the embodiment.

In the example of the configuration shown in FIG. 2, the IC card processing device 2 is a host device having a function of communicating with the IC card 1 via the card reader/writer 24. The IC card processing device 2 may be, for example, a device in which the card reader/writer 24 is connected to a control device such as a personal computer (PC).

As shown in FIG. 2, the IC card processing device 2 includes a control unit 21, a display unit 22, an operation unit 23, a card reader/writer 24, and the like.

The control unit 21 controls operation of the entire IC card processing device 2. The control unit 21 includes a processor (CPU) 25, a RAM 26, a ROM 27, a nonvolatile memory 28, a communication unit 29, a timer 30, and the like. For example, the control unit 21 is configured by a personal computer.

The processor 25 executes various types of processing by executing programs stored in the ROM 27 or the nonvolatile memory 28. The RAM 26 functions as a working memory that temporarily retains data. The ROM 27 is a nonvolatile memory that stores programs, control data, etc. The nonvolatile memory 28 is a rewritable nonvolatile memory. The communication unit 29 is an interface for communicating with an external device. The timer 30 measures an elapsed time. The timer 30 is controlled by the processor 25 to start and stop measuring the elapsed time.

The control unit 21 has a function of transmitting a command to the IC card 1 by the card reader/writer 24, a function of performing various types of processing based on data received from the IC card 1, and the like. For example, the control unit 21 performs control to write data in the nonvolatile memory inside the IC card 1 by transmitting a data write command to the IC card 1 via the card reader/writer 24. The control unit 21 also performs control to read data from the IC card 1 by transmitting a read command to the IC card 1. The control unit 21 controls an application which is to be selected in the IC card 1, by transmitting an application selection command to the IC card 1.

The display unit 22 is a display device that displays various types of information under the control of the control unit 21. The operation unit 23 is configured by a keyboard, a ten-key, a pointing device, etc. The operation unit 23 is for an operator of the IC card processing device 2 to input various operation instructions, data, etc. The operation unit 23 also functions as an input unit for inputting identification information of a user of the IC card 1 or authentication information such as a password.

The card reader/writer 24 is a communication unit for communicating with the IC card 1. The card reader/writer 24 is configured by an interface compatible with a communication method of the IC card 1. For example, in a case where the IC card 1 is a contact type IC card, the card reader/writer 24 is configured by a contact unit for physically and electrically connecting to a contact unit of the IC card 1. In addition, in a case where the IC card 1 is a non-contact type IC card, the card reader/writer 24 is configured by an antenna for performing wireless communication with the IC card 1, communication control, and the like. The card reader/writer 24 performs power supply, clock supply, reset control, and data transmission/reception with respect to the IC card 1. The card reader/writer 24 activates (starts up) the IC card 1, transmits various commands, and receives responses to the transmitted commands, based on the control by the control unit 21.

Next, communication processing between the IC card 1, which is the portable electronic device according to the embodiment, and the IC card processing device 2 will be described.

The IC card 1 executes processing according to a command from the IC card processing device 2 including the card reader, and transmits (responds) a response including an execution result of the processing according to the command to the IC card processing device 2. A processing time required for the IC card 1 to execute processing in accordance with a command from the IC card processing device 2 is a time that can be estimated in advance in a case where the processing is normally executed. That is, in a case where a range of a normal processing time for a command in the IC card 1 is set, a range (the upper limit value and the lower limit value) of a standby time from when the IC card processing device 2 transmits a command to when it receives a response can be set.

The IC card 1 according to the embodiment can set a lower limit value and an upper limit value as a range of a normal processing time required for processing according to a command. The lower limit value and the upper limit value for the processing time are set in advance according to the specification of the IC card 1, etc., and are stored as internal data when the IC card is manufactured or issued. For example, the internal data is stored as setting information of the standby time including the lower limit and the upper limit of the processing time in a memory such as the ROM 13 or the nonvolatile memory 14. The setting information of the standby time may be stored for each application, for each command, or for each file (DF or EF).

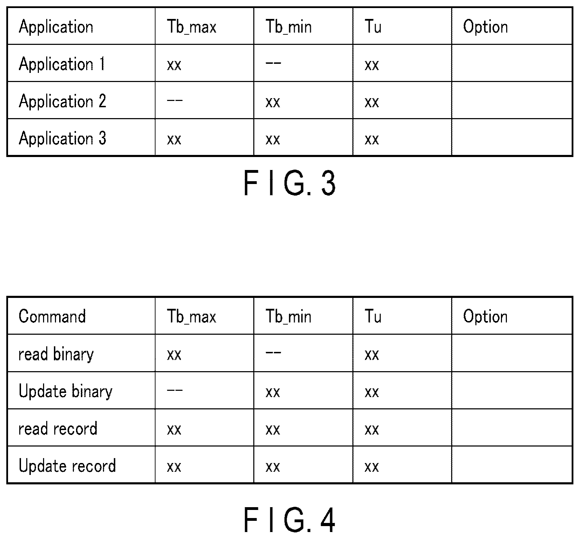

FIG. 3 is a diagram showing an example of a configuration in a case where the IC card 1 serving as the portable electronic device according to the embodiment stores setting information of a standby time for each application.

FIG. 3 shows an example of a configuration of a table that stores setting information of a standby time including a lower limit for a normal processing time based on a format defined in ISO/IEC 7816-4:2020, 12.2.4.2.

In the example shown in FIG. 3, the setting information of the standby time includes an upper limit value (Tb_max) of a processing time, a lower limit value (Tb_min) of the processing time, a unit time (Tu), and an option, which are set for each application.

"Tb_max" is an upper limit reference time (for example, Tb_max [ms]) for the processing time. "Tb_min" is a lower limit reference time (for example, Tb_min [ms]) for the processing time. "Tu" is a transmission time of unit data (for example, Tu [ms/B]). Herein, in a case where a length of communication data is set to Ld (for example, Ld [B]), the communication time is calculated as "Tu×Ld" ([ms]).

The time (standby time) from when the IC card processing device 2 transmits a command to the IC card 1 to when the IC card processing device 2 receives a response includes a processing time and a communication time with respect to the command in the IC card 1. Therefore, in a case where the length of the communication data is set to Ld, the upper limit value (Tmax) of the standby time is calculated by Tmax = Tb_max + (Tu × Ld). In addition, in a case where the length of the communication data is set to Ld, the lower limit value (Tmin) of the standby time is calculated by Tmin = Tb_min + (Tu × Ld).

In the setting information of the standby time shown in FIG. 3, for each application, one of the upper limit value and the lower limit value can be set, or both of the upper limit value and the lower limit value can be set or unset. As a concrete example, in the example shown in FIG. 3, the upper limit value of the processing time is set and the lower limit is not set for "Application 1". In this case, since the IC card 1 does not designate the lower limit of the processing time, the IC card processing device 2 checks the upper limit for the standby time without checking the lower limit for the standby time.

In the example shown in FIG. 3, the upper limit value of the processing time is not set and the lower limit value is set for "Application 2". In such case, since the IC card 1 does not designate the upper limit of the processing time, the IC card processing device 2 checks the lower limit for the standby time without checking the upper limit for the standby time. In the example shown in FIG. 3, both the upper limit value and the lower limit value of the processing time are set for "Application 3". In such a case, since the IC card designates the upper limit and the lower limit of the processing time, the IC card processing device 2 checks both the upper limit and the lower limit for the standby time.

In the setting information of the standby time shown in FIG. 3, "option" can be set for each application. As the setting of "option" in the setting information of the standby time, for example, a logical channel, a secure session, a priority order, etc., can be designated.

The logical channel is a communication channel that is logically set, for example, as defined in ISO/IEC 7816-4. As an option of the setting information of the standby time, a logical channel in which setting of a range of the standby time is enabled and a logical channel in which setting of a range of the standby time is disabled may be designated (set). In such a case, the IC card 1 switches, for each logical channel, whether to enable or disable the setting of the range of the standby time according to the setting of the option.

The secure session is a secure communication mode including encryption and decryption defined by, for example, ISO/IEC 7816-4. As an option for setting information of the standby time, setting can be made such that setting of a range of the standby time is enabled in a case of a secure session, and is disabled in a case of a non-secure session. In such a case, the IC card 1 switches whether to enable or disable setting of a range of the standby time depending on whether or not the session is a secure session according to the setting of the option.

Furthermore, as an option of the setting information of the standby time, a priority order can be set. The priority order in the option is, for example, setting information for determining which setting information is prioritized in a case where there is setting information of a standby time set under another condition, as will be described later. That is, in a case where there are a plurality of items of setting information of the standby time set under different conditions, the IC card 1 is configured to specify setting information of the standby time to be applied, based on the priority order set as an option.

FIG. 4 is a diagram showing an example of a configuration in a case where the IC card 1, which is the portable electronic device according to the embodiment, stores setting information of a standby time for each command.

FIG. 4 shows an example of a configuration of a table that stores setting information of a standby time including a lower limit value for a normal processing time based on a format defined by ISO/IEC 7816-4. The setting information of the standby time shown in FIG. 4 includes an upper limit value (Tb_max) of a processing time, a lower limit value (Tb_min) of the processing time, a unit time (Tu), and an option, which are set for each command. As with the example shown in FIG. 3, the upper limit value (Tb_max) of the processing time is an upper limit reference time for a normal processing time, and the lower limit value (Tb_min) of the processing time is a lower limit reference value for the normal processing time.

According to the setting information of the standby time shown in FIG. 4, the upper limit value (Tmax) of the standby time is calculated by Tmax = Tb_max + (Tu × Ld) in a case where a length of communication data is Ld, as in the example shown in FIG. 3. In a case where the length of the communication data is set to Ld, the lower limit value (Tmin) of the standby time is calculated by

$$Tmin = Tb\_min + (Tu \times Ld).$$

In the setting information of the standby time shown in FIG. 4, for each command, one of the upper limit value and the lower limit value can be set, or both of the upper limit value and the lower limit value can be set or unset. As a concrete example, in the example shown in FIG. 4, with respect to "read binary", the upper limit value (Tb_max) for the normal processing time in the IC card is set and the lower limit (Tb_min) is not set. In such a case, since the IC card 1 does not designate the lower limit of the standby time, the IC card processing device 2 does not check the lower limit of the standby time.

In the example shown in FIG. 4, the upper limit value (Tb_max) for the normal processing time in the IC card is not set and the lower limit value (Tb_min) is set with respect to "update binary". In such a case, since the IC card does not designate the upper limit of the standby time, the IC card processing device 2 does not check the upper limit for the standby time. In the example shown in FIG. 4, with respect to "read record", both the upper limit value (Tb_max) and the lower limit value (Tb_min) for the normal processing time in the IC card are set. In such a case, since the IC card 1 designates the upper limit and the lower limit of the standby time, the IC card processing device 2 checks both the upper limit and the lower limit for the standby time. In the example shown in FIG. 4, with respect to "update record", both the upper limit value (Tb_max) and the lower limit value (Tb_min) for the normal processing time in the IC card are set. In such a case, since the IC card 1 designates the upper limit and the lower limit of the standby time, the IC card processing device 2 checks both the upper limit and the lower limit for the standby time.

As shown in FIG. 4, as the "option" in the setting information of the standby time for each command, a logical channel, a secure session, a priority order, etc., can be set as in the example shown in FIG. 3.

Furthermore, the IC card 1, which is the portable electronic device according to the embodiment, may cause a memory to store, for each file, the setting information of the standby time indicating the upper limit and the lower limit of the range of the processing time.

For example, in the nonvolatile memory 14, as described above, data of an application is stored in a file which is managed while having a file structure of the plurality of files including the MF, the DF, the EF, and the like. In such a case, the setting information of the standby time may be set for each file such as the DF or the EF. The setting information of the standby time for each file is setting information in which setting information such as the upper limit of the processing time, the lower limit of the processing time, the unit time, and the option is set for each file, as in the example shown in FIG. 3 or FIG. 4. In the setting information of the standby time for each command, for each file, one of the upper limit value and the lower limit value can be set, or both the upper limit value and the lower limit value can be set or unset.

Next, adjustment of the upper limit value and the lower limit value of the processing time in the setting information of the standby time in the IC card 1 according to the embodiment will be described.

The range of the normal processing time in the IC card 1 according to the embodiment may vary depending on the state of the IC card. Therefore, the IC card 1 according to the embodiment has a function of adjusting the upper limit value and the lower limit value of the processing time in the setting information of the standby time, depending on the state of the IC card. For example, the IC card 1 can adjust the upper limit value and the lower limit value of the processing time depending on the communication state, the memory state, or the like.

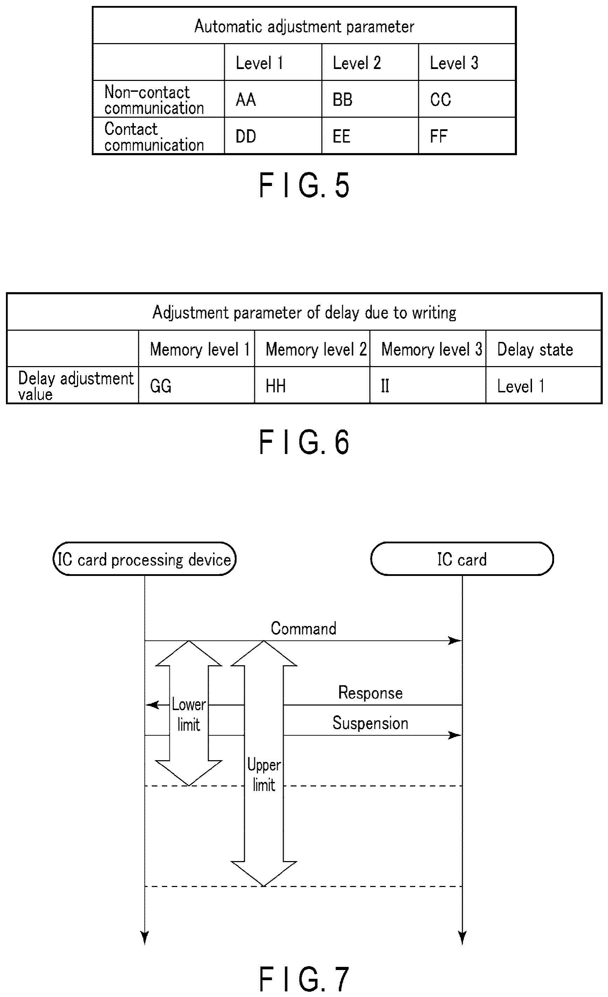

FIG. 5 is a diagram showing an example of setting of adjustment parameters for the IC card 1 to adjust the upper limit value and the lower limit value of the processing time according to the communication state.

The IC card 1 operates with power supplied from the IC card processing device 2, so that the processing time according to the command can be changed depending on the communication state. For example, in a case where the IC card 1 establishes a communication connection to the IC card processing device (card reader/writer) 2 via a contact type interface, the processing time of the IC card 1 varies depending on the application voltage supplied from the IC card processing device 2.

In addition, in a case where the IC card 1 establishes a communication connection to the IC card processing device 2 via a non-contact type interface, the processing time of the IC card 1 varies depending on the contactless communication environments such as the magnetic field strength from the IC card processing device (card reader/writer 24) 2. For example, the magnetic field strength varies depending on the distance between the interface 16 of the IC card 1 and the card reader/writer 24 of the IC card processing device 2. Therefore, the contactless communication environments of the IC card 1 that establish communications via a contactless interface may frequently vary.

The IC card 1 stores adjustment values for the upper limit and the lower limit of the processing time as adjustment parameters according to the communication state in a memory such as the ROM 13 or the nonvolatile memory 14. In the example shown in FIG. 5, the adjustment values are each set according to the level of the communication state (the intensity of the application voltage or the magnetic field). The adjustment value according to the communication state is set as a coefficient or an offset value for the upper limit value and the lower limit value of the processing time.

For example, in a case where an adjustment value is set as a coefficient for an upper limit value and a lower limit value of the processing time, the upper limit value and the lower limit value of the processing time are adjusted by multiplying the adjustment value. Specifically, in a case where the communication state is level 1 and the adjustment value as a coefficient is "AA", "Tb_max" is adjusted to be "Tb_max" × "AA", and "Tb_min" is adjusted to be "Tb_min" × "AA".

In addition, in a case where an adjustment value is set as an offset for an upper limit value and a lower limit value of processing time, the upper limit value and the lower limit value of the processing time are adjusted by adding the adjustment value. Specifically, in a case where the communication state is level 1 and the adjustment value as the offset is "AA", "Tb_max" is adjusted to be "Tb_max" + "AA", and "Tb_min" is adjusted to be "Tb min" + "AA".

With adjustment parameters corresponding to a communication state being set, as shown in FIG. 5, the IC card 1 specifies a level corresponding to the communication state in a case where the communication with the IC card processing device 2 is started. Upon specifying the level of the communication state, the IC card 1 calculates an upper limit value and a lower limit value for processing time adjusted by using, as a coefficient or an offset value, an adjustment value according to the specified level. The IC card 1 transmits the adjusted upper limit value and lower limit value for the processing time to the IC card processing device 2 at a predetermined timing defined in a standard, etc.

FIG. 6 is a diagram showing an example of setting of the adjustment value according to the state of the memory (for example, the nonvolatile memory 14) for writing data in the IC card 1.

The nonvolatile memory 14 in an IC card 1 has a data storage area in which data is written in accordance with a command for requesting writing of data. Storage elements constituting the data storage area may be degraded in performance. For example, in a case where data is frequently written in the nonvolatile memory 14 (data storage area), there is a possibility that data cannot be completely erased and written in processing that takes a normal processing time (normal one-time processing).

In a case where the IC card 1 cannot perform data erasing and writing in normal one-time processing, it is necessary to perform data erasing and writing a plurality of times, or to lengthen a time required for one-time data erasing and writing. That is, if the IC card 1 repeats writing of data in the storage area of the nonvolatile memory 14, processing of data writing may be delayed.

Therefore, the IC card 1 sets an adjustment parameter (delay adjustment parameter) according to the state of the memory, as an adjustment value corresponding to the delay of data write processing. As the delay adjustment parameter, adjustment values for the upper limit value and the lower limit value of the processing time in the setting information of the standby time are stored in a memory such as the ROM 13 or the nonvolatile memory 14 in such a manner that each of the adjustment values is correlated with the state of the memory.

For the delay adjustment parameters shown in FIG. 6, an adjustment value according to a level indicating a state of a memory is set. The level indicating the state of the memory is specified by the use frequency of the storage area or the delay of the processing time which is actually detected. For example, as an index value indicating the use frequency, the number of times of writing data for each storage area in the nonvolatile memory 14 is stored. In such a case, a level (memory level) indicating a state of the memory is determined depending on whether or not the use frequency becomes equal to or greater than a threshold set for each level. Furthermore, as an index value indicating the delay of processing time which is actually detected, for example, the number of times the IC card processing device 2 transmits WTX from the reception of a command to the transmission of a response is stored. In such a case, the level indicating the state of the memory is determined according to the delay of processing time which is actually detected.

As described above, the IC card 1 specifies the level (memory level) indicating the state of the memory from the use frequency, the delay of processing time which is actually detected, or the like. Upon specifying the level indicating the state of the memory, the IC card 1 calculates the upper limit value and the lower limit value for the processing time adjusted by using, as the coefficient or the offset value, the adjustment value according to the specified level. The IC card 1 transmits the adjusted upper limit value and lower limit value for the processing time to the IC card processing device 2 at a predetermined timing defined in a standard, etc.

Next, a check operation of the upper limit and the lower limit of the standby time performed by the IC card processing device 2 that communicates with the IC card 1 serving as the portable electronic device according to the embodiment will be described.

FIG. 7 is a sequence for illustrating an operation including checking of the upper limit and the lower limit of the standby time performed by the IC card processing device 2 according to the embodiment.

Upon initiating communications with the IC card processing device 2, the IC card 1 presents (transmits) standby time information indicating the lower limit value and the upper limit value of the processing time based on the setting information as described above to the IC card processing device 2. The IC card processing device 2 stores the standby time information presented by the IC card 1, and then transmits a command for causing the IC card 1 to execute desired processing. When transmitting the command, the IC card processing device 2 starts measuring an elapsed time until receipt of a response from the IC card.

The IC card processing device 2 sets a lower limit value and an upper limit value of the standby time calculated from the standby time information presented by the IC card 1. As shown in FIG. 7, in a case of receiving a response from the IC card 1 before the elapsed time from the transmission of the command reaches the lower limit value of the standby time, the IC card processing device 2 suspends the processing with respect to the IC card concerned. This enables fraudulent skipping of processing in the IC card to be detected from the standby time until the IC card processing device 2's receipt of the response.

Furthermore, the IC card processing device 2 can set not only the lower limit value of the standby time but also the upper limit value of the standby time from the standby time information. That is, in a case where the IC card processing device 2 cannot receive a response from the IC card within an appropriate standby time range, the IC card processing device 2 can determine the fact that the IC card does not perform processing in response to the command in a normal operation. As a result, a fraudulent operation of the IC card serving as a portable electronic device can be detected, and a fraudulent use due to an external attack, etc., can be prevented.

Next, the operation of the IC card 1 serving as the portable electronic device according to the embodiment will be described.

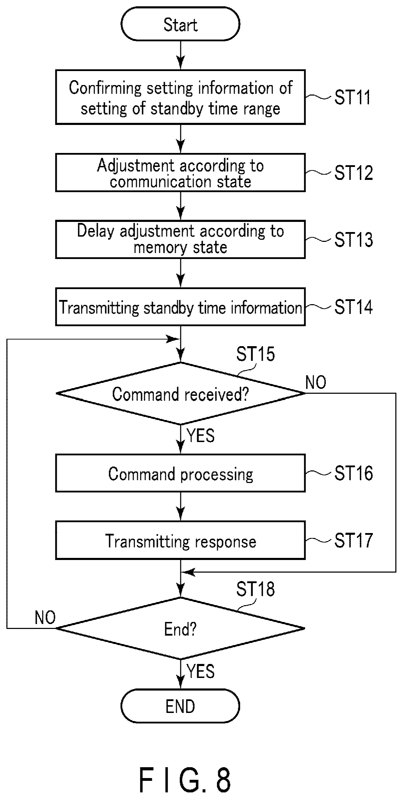

FIG. 8 is a flowchart for illustrating an operation example of the IC card 1 serving as the portable electronic device according to the embodiment.

The processor 11 of the IC card 1 is activated by power supplied from the IC card processing device 2, thereby performing initial communications including initial setting with the IC card processing device 2. Upon completion of the initial communication, the processor 11 confirms the setting information of the standby time stored in the ROM 13 or the nonvolatile memory 14 (step ST11).

For example, in a case where the setting information of the standby time is stored for each application, the processor 11 specifies setting information such as the upper limit value and the lower limit value of the processing time from pieces of setting information corresponding to the application which is being selected. In a case where the setting information of the standby time for each command is stored, the processor 11 specifies setting information such as the upper limit value and the lower limit value of the processing time for each command. Furthermore, in a case where the setting information of the standby time is stored for each file, the processor 11 specifies setting information such as the upper limit value and the lower limit value of the processing time corresponding to the file which is being selected.

The processor 11 adjusts the upper limit value and the lower limit value of the processing time based on automatic adjustment parameters stored in the ROM 13 or the nonvolatile memory 14 (step ST12). For example, the processor 11 refers to the automatic adjustment parameters as shown in FIG. 5, and determines a level (communication level) according to a communication state with the IC card processing device 2 to which a communication connection is established via the interface 16.

Upon specifying a level of a communication state with the IC card processing device 2, the processor 11 specifies an adjustment value according to the level of the communication state from the automatic adjustment parameters. Upon specifying the adjustment value according to the communication state, the processor 11 adjusts the upper limit value and the lower limit value of the processing time by setting the adjustment value according to the communication state to a coefficient or an offset, as described above. In a case where no automatic adjustment parameter is set, the processor 11 omits the adjustment according to the communication state.

Furthermore, the processor 11 adjusts the upper limit value and the lower limit value of the processing time for write processing based on the adjustment parameter of delay due to writing stored in the ROM 13 or the nonvolatile memory 14 (step ST13). For example, the processor 11 refers to the delay adjustment parameters as shown in FIG. 6, and specifies a memory level according to the state of the nonvolatile memory 14 serving as the data storage area.

Upon specifying the memory level, the processor 11 specifies an adjustment value according to the memory level from the delay adjustment parameters. Upon specifying the adjustment value according to the memory level, the processor 11 adjusts the upper limit value and the lower limit value of the processing time for data write processing by using the adjustment value according to the memory level as a coefficient or an offset, as described above. In a case where no delay adjustment parameter is set, the processor 11 omits the delay adjustment according to the state of the memory.

When the adjustment of the upper limit value and the lower limit value of the processing time in the setting information of the standby time ends, the processor 11 transmits standby time information including the adjusted upper limit value and lower limit value of the processing time to the IC card processing device 2 (step ST14). After transmitting the standby time information, the processor 11 receives a command from the IC card processing device 2 (step ST15).

Upon receipt of the command from the IC card processing device 2 (step ST15, YES), the processor 11 executes processing according to the received command (step ST16). Upon completion of the processing according to the command, the processor 11 transmits a response including a processing result of the command to the IC card processing device 2 (step ST17).

In a case of receiving no notification of transaction end (suspension) after transmitting the response (step ST18, NO), the processor 11 proceeds to step ST15 and waits for receipt of the next command. Furthermore, in a case of receiving a notification of the transaction end from the IC card processing device 2 after transmitting the response (step ST18, YES), the processor 11 ends the series of communication processing with the IC card processing device 2.

Next, the operation of the IC card processing device 2 including the card reader/writer that communicates with the IC card 1 serving as the portable electronic device according to the embodiment will be described.

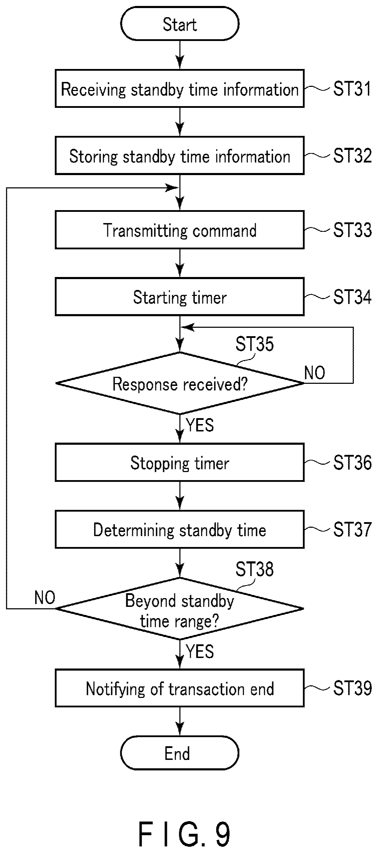

FIG. 9 is a flowchart for illustrating an operation example of the IC card processing device 2 according to the embodiment.

The control unit 21 of the IC card processing device 2 supplies power to the IC card 1 connected to the card reader/writer 24, thereby activating the IC card 1. Upon activation of the IC card 1 to which communication connection is established via the processor 25 of the control unit 21 and the card reader/writer 24, the initial communication including initial setting with the IC card 1 is performed.

After the initial communication ends, the processor 25 of the control unit 21 receives the standby time information from the IC card 1 via the card reader/writer 24 (step ST31). For example, in the control unit 21, the processor 25 activates an application for processing the IC card 1. Upon activation of the application for processing the IC card 1, the processor 25 requests communication setting information including standby time information from the IC card 1, and receives the communication setting information including the standby time information transmitted by the IC card 1 in response to the request.

Upon receipt of the information including the standby time information from the IC card 1, the processor 25 of the control unit 21 stores the standby time information included in the information received from the IC card 1 in a memory such as the nonvolatile memory 28 or the RAM 26 (step ST32). Upon storing the standby time information, the processor 25 of the control unit 21 transmits, from the card reader/writer 24, a command for causing the IC card 1 to execute requested processing (step ST33).

Upon transmitting the command to the IC card 1, the processor 25 starts clocking of an elapsed time with the timer 30 (step ST34). The processor 25 waits for a response from the IC card 1 while measuring the elapsed time with the timer 30 (step ST35). If there is no response from the IC card 1 (step ST35, NO), the processor 25 continues the measurement of the elapsed time with the timer 30.

In a case of receiving the response from the IC card 1 (step ST35, YES), the processor 25 stops clocking with the timer 30 (step ST36), and decides a time (standby time) from the transmission of the command to the reception of the response. In a case where the standby time is decided, the processor 25 determines whether or not the decided standby time is beyond the standby time range designated by the standby time information (step ST37).

In a case where it is determined that the decided standby time is not beyond the standby time range designated in the standby time information (it is within the standby time range) (step ST38, NO), the processor 25 returns to step ST33 and repeatedly performs the processing described above.

In a case where it is determined that the determined standby time is beyond the standby time range designated in the standby time information (step ST38, YES), the processor 25 ends (suspends) the processing with respect to the IC card 1 and notifies the IC card 1 of the end of the transaction (step ST39). That is, the processor 25 suspends the processing of the IC card 1 in a case where the decided standby time is shorter than the lower limit value of the standby time or where the decided standby time is longer than the upper limit value of the standby time.

For example, in a case where the decided standby time is shorter than the lower limit value of the standby time, the processor 25 suspends the processing of the IC card 1 due to the too short standby time. Accordingly, in a case where a prescribed processing step is omitted due to a security attack or the like in the IC card 1, even when contents of a response from the IC card 1 are normal, the IC card processing device 2 can detect the fraud and suspend the processing in the IC card 1. In such a case, the processor 25 of the IC card processing device 2 may cause the display unit 22 to display (notify) the suspension of the processing due to a possibility of fraud due to the skipping of the processing.

The operation example described above assumes that a determination is made as to whether or not the standby time until receipt of a response is beyond the standby time range. However, the transaction may be ended in a case where the elapsed time from transmission of a command exceeds the upper limit value of the standby time. That is, the processor 25 checks whether or not the elapsed time clocked by the timer 30 in the state of waiting for reception of a response exceeds the upper limit value of the standby time. In a case where the elapsed time clocked by the timer 30 exceeds the upper limit value of the standby time, the processor 25 may determine that the elapsed time is beyond the standby time range and proceed to step ST39.

As described above, the IC card serving as the portable electronic device according to the embodiment provides the IC card processing device with standby time information indicating the lower limit value of a standby time from transmission of a command to reception of a response based on setting information of the standby time stored in the memory.

Accordingly, in a case where the standby time from the transmission of the command to the reception of the response is shorter than the lower limit value of the standby time designated by the IC card, the IC card processing device can suspend the processing performed by the IC card regardless of the content of the response from the IC card. As a result, the IC card serving as the portable electronic device according to the embodiment can detect a response that is too much shorter than the lower limit value of the standby time due to a security attack that causes the prescribed processing to be skipped, so that the processing including a fraudulent operation in the IC card can be suspended.

In addition, the IC card serving as the portable electronic device according to the embodiment enables setting of setting information of a standby time for each application, each command, or each file, and enables setting of each of the lower limit and the upper limit of the standby time in the setting information of the standby time. Accordingly, the IC card serving as the portable electronic device according to the embodiment enables detailed setting according to the operation, for example, setting only the lower limit of the standby time, only the upper limit, or both the lower limit and the upper limit, for each specific application, command, and file.

In addition, the IC card serving as the portable electronic device according to the embodiment enables adjustment of the lower limit value and the upper limit value of the processing time set in the setting information of the standby time according to the communication state. In addition, the IC card serving as the portable electronic device according to the embodiment enables adjustment of the lower limit value and the upper limit value of the processing time set in the setting information of the standby time according to the state of the memory in which data is to be written. By setting the lower limit and the upper limit of the processing time according to the card state, the IC card serving as the portable electronic device according to the embodiment, and the IC card processing device enable a fraud operation to be detected with high accuracy from the standby time.

The functions described in each embodiment described above are not limited to those configured using hardware, and may be realized by causing a computer to read, using software, a program describing these functions. Each of the functions may be configured by selecting either software or hardware as appropriate.

While several embodiments have been described, these embodiments have been presented by way of example and are not intended to limit the scope of the invention. Indeed, the embodiments described herein may be embodied in a variety of other forms; furthermore, various omissions, substitutions and changes in the form of the embodiments described herein may be made without departing from the spirit of the inventions. These embodiments and modifications thereof are included in the scope and gist of the invention, and are included in the invention described in the claims and the equivalent scope thereof.

## Claims

1. A portable electronic device comprising:

   an interface configured to communicate with an external device;
   a memory configured to store setting information of a standby time for setting a lower limit value of the standby time, the standby time spanning from when the external device transmits a command to when the external device receives a response to the command; and
   a processor configured to transmit, to the external device, standby time information for specifying the lower limit value of the standby time based on the setting information of the standby time stored in the memory, execute processing according to a command received from the external device to which the standby time information has been transmitted, and transmit, to the external device, a response including an execution result of the processing according to the command.

2. The portable electronic device according to claim 1, wherein

   the setting information of the standby time includes a lower limit value of a processing time required for processing according to a command,
   the memory is further configured to store information indicating an adjustment value according to a communication state, and
   the processor is configured to specify a communication state with the external device via the interface, and transmit, to the external device, standby time information including the lower limit value of the processing time adjusted using the adjustment value according to the communication state.

3. The portable electronic device according to claim 1, wherein

   the setting information of the standby time includes a lower limit value of a processing time required for data write processing with respect to a data storage area in the memory,
   the memory is further configured to store a delay adjustment value according to a state of the data storage area, and
   the processor is configured to specify a state of the data storage area, and transmit, to the external device, standby time information including the lower limit value of the processing time adjusted using the delay adjustment value according to the state of the data storage area.

4. The portable electronic device according to claim 1, wherein the memory is configured to store the setting information of the standby time for each application.

5. The portable electronic device according to claim 1, wherein the memory is configured to store the setting information of the standby time for each command.

6. The portable electronic device according to claim 1, wherein the memory is configured to store data to be stored in a file managed in a predetermined file structure, and store the setting information of the standby time for each file.

7. An IC card comprising:

a module including:
an interface configured to communicate with an external device:

a memory configured to store setting information of a standby time for setting a lower limit value of the standby time, the standby time spanning from when the external device transmits a command to when the external device receives a response to the command; and
a processor configured to transmit, to the external device, standby time information for specifying the lower limit value of the standby time based on the setting information of the standby time stored in the memory, execute processing according to a command received from the external device to which the standby time information has been transmitted, and transmit, to the external device, a response including an execution result of the processing according to the command; and

a main body having the module.

8. An IC card processing device comprising:

a communication unit configured to communicate with an IC card;
a memory configured to store standby time information acquired from the IC card; and
a processor configured to, in a case of receiving a response to a command before an elapsed time from transmission of the command to the IC card reaches a lower limit value of a standby time specified from the standby time information stored in the memory, suspend processing performed by the IC card.

M    Ca    C                    1

16                    11              13

2

IC card
processing
device          Interface  Communication
control
unit      Processor
(CPU)    ROM
(program memory)

15                            12

RAM
(working memory)

14

Nonvolatile memory
(data memory)

IC card

# F I G. 1

2

22              23

Display unit    Operation
unit              21

25

Processor

Card
reader/writer    IC card

29        26

Communication
unit      RAM

28        27

Nonvolatile
memory    ROM

30

Timer

Control unit (PC)

IC card processing device

# F I G. 2

| Application | Tb_max | Tb_min | Tu | Option |
|---|---|---|---|---|
| Application 1 | xx | -- | xx | |
| Application 2 | -- | xx | xx | |
| Application 3 | xx | xx | xx | |

F I G. 3

| Command | Tb_max | Tb_min | Tu | Option |
|---|---|---|---|---|
| read binary | xx | -- | xx | |
| Update binary | -- | xx | xx | |
| read record | xx | xx | xx | |
| Update record | xx | xx | xx | |

F I G. 4

| Automatic adjustment parameter | | | |
|---|---|---|---|
| | Level 1 | Level 2 | Level 3 |
| Non-contact communication | AA | BB | CC |
| Contact communication | DD | EE | FF |

## F I G. 5

| Adjustment parameter of delay due to writing | | | | |
|---|---|---|---|---|
| | Memory level 1 | Memory level 2 | Memory level 3 | Delay state |
| Delay adjustment value | GG | HH | II | Level 1 |

## F I G. 6

## F I G. 7

Start

Confirming setting information of
setting of standby time range — ST11

Adjustment according to
communication state — ST12

Delay adjustment according to
memory state — ST13

Transmitting standby time information — ST14

ST15
Command received? — NO

YES

Command processing — ST16

Transmitting response — ST17

ST18
End? — NO

YES

END

F I G. 8

Start

Receiving standby time information ⌐∽ST31

Storing standby time information ⌐∽ST32

Transmitting command ⌐∽ST33

Starting timer ⌐∽ST34

ST35
Response received? ──NO──┐
│YES

Stopping timer ⌐∽ST36

Determining standby time ⌐∽ST37

ST38
NO── Beyond standby time range?
│YES

Notifying of transaction end ⌐∽ST39

End

F I G. 9

## INTERNATIONAL SEARCH REPORT

| | International application No. |
|---|---|
| | **PCT/JP2024/023011** |

**A. CLASSIFICATION OF SUBJECT MATTER**

*G06F 21/55*(2013.01)i; *G06K 7/00*(2006.01)i; *G06K 19/073*(2006.01)i
FI:   G06F21/55; G06K19/073; G06K7/00 008

According to International Patent Classification (IPC) or to both national classification and IPC

**B. FIELDS SEARCHED**

Minimum documentation searched (classification system followed by classification symbols)

G06F21/55; G06K7/00; G06K19/073

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 1-233687 A (MATSUSHITA ELECTRIC INDUSTRIAL CO., LTD.) 19 September 1989 (1989-09-19) <br> page 2, lower right column, lines 17-20, page 3, upper left column, lines 1-11, upper right column, lines 1-20, lower left column, lines 1-20, lower right column, lines 1-10, page 4, lower left column, lines 1-20, lower right column, lines 1-20, page 5, upper left column, lines 1-12, fig. 1 | 1, 4-8 |
| A | | 2-3 |
| Y | JP 2006-318453 A (FELICA NETWORKS, INC.) 24 November 2006 (2006-11-24) <br> paragraphs [0082], [0236]-[0237], fig. 3 | 1, 4-8 |
| A | | 2-3 |
| Y | JP 2018-206300 A (TOPPAN PRINTING CO., LTD.) 27 December 2018 (2018-12-27) <br> paragraphs [0040]-[0042] | 6 |
| A | | 2-3 |

☑ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

International application No.

**PCT/JP2024/023011**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2004-164260 A (DAI NIPPON PRINTING CO., LTD.) 10 June 2004 (2004-06-10) paragraph [0016], fig. 2 | 6 |
| A | | 2-3 |

Form PCT/ISA/210 (second sheet) (July 2022)

## INTERNATIONAL SEARCH REPORT
### Information on patent family members

| International application No. |
| --- |
| **PCT/JP2024/023011** |

| Patent document cited in search report | | | Publication date (day/month/year) | Patent family member(s) | Publication date (day/month/year) |
| --- | --- | --- | --- | --- | --- |
| JP | 1-233687 | A | 19 September 1989 | (Family: none) | |
| JP | 2006-318453 | A | 24 November 2006 | (Family: none) | |
| JP | 2018-206300 | A | 27 December 2018 | (Family: none) | |
| JP | 2004-164260 | A | 10 June 2004 | (Family: none) | |

Form PCT/ISA/210 (patent family annex) (July 2022)